(19) **Europäisches Patentamt**

**European Patent Office**

**Office européen des brevets**

(11) Publication number : **0 686 648 A1**

(12) **EUROPEAN PATENT APPLICATION**

(21) Application number : **95304019.3**

(22) Date of filing : **09.06.95**

(51) Int. Cl.⁶ : **C08F 210/08,** C08F 210/06

(30) Priority : **09.06.94 JP 127787/94**

(43) Date of publication of application :
**13.12.95 Bulletin 95/50**

(84) Designated Contracting States :
**DE FR GB IT**

(71) Applicant : **SUMITOMO CHEMICAL COMPANY, LIMITED**
**5-33, Kitahama 4-chome**
**Chuo-ku**
**Osaka (JP)**

(72) Inventor : **Sadatoshi, Hajime**
**1-4-96 Sakuradai**
**Ichihara-shi, Chiba (JP)**

(74) Representative : **Ablewhite, Alan James**
**MARKS & CLERK,**
**57/60 Lincoln's Inn Fields**
**London WC2A 3LS (GB)**

(54) **Syndiotactic crystalline copolymer of propylene and butene-1**

(57)    The present invention relates to provide crystalline copolymer of propylene and butene-1 with an essentially syndiotactic structure, which have crystalline structure even in the region where content of butene-1 is relatively high and which is excellent in stiffness.

A crystalline copolymer of propylene and butene-l with an essentially syndiotactic structure, the copolymer containing from 31 to 99 mole % of butene-l and having an intrinsic viscosity [η] of from 0.5 to 10 dl/g when measured in tetralin at 135°C and a crystalline structure.

EP 0 686 648 A1

## FIELD OF THE INVENTION

The present invention relates to crystalline copolymer of propylene and butene-1 with an essentially syndiotactic structure and an excellent balance between stiffness and impact strength.

## BACKGROUND OF THE INVENTION

Syndiotactic polypropylene has been previously produced by Natta et al. by extraction-elution of a polypropylene obtained with a $\gamma$-TiCl$_3$/AlEt$_2$F catalyst or a TiCl$_4$/LiBu catalyst (U.S. Patent No. 3,258,455). Natta et al. have reported that a syndiotactic polypropylene was obtained by polymerization of propylene at low temperature with a VCl$_4$-anisole complex/Al(iso-Bu$_2$Cl) catalyst system (J. Am. Chem. Soc., 84, 1488(1962)). However, the yield and physical properties of the syndiotactic polypropylenes obtained with the catalyst systems mentioned above were not of practical use because the stereoregularity of the syndiotactic polypropylene was 0.487 for the syndiotactic pentad fraction ([rrrr]) and its melting temperature was about 133°C. Ewen et al. prepared a highly syndiotactic polypropylene using isopropylidene (cyclopentadienyl-1-fluorenyl)zirconium dichloride and methyl aluminoxane with high activity (JP-A-2-415305, where the term "A" as described herein means an "unexamined published Japanese patent application").

Compared with isotactic polypropylene, syndiotactic polypropylene shows a good impact property and transparency, the lower melting temperature and inferiority in tensile yield strength, flexural strength and the like. The differences in these properties between syndiotactic polypropylene and isotactic polypropylene derived from the low crystallinity and relatively small spherulite size of syndiotactic polypropylene.

A much better use of the excellent properties of the syndiotactic polypropylene can be made when it is applied as elastomers, because the syndiotactic polypropylene has inherently a high content of an amorphous part which provides excellent impact property and transparency, and simultaneously a crystalline part of low melting temperature which provides good molding property and higher stiffness than that of elastomers.

Random copolymers of propylene and ethylene or propylene and other olefins have been known to have a relatively high content of an amorphous part. These random copolymers can be obtained with a conventional Ziegler-Natta catalyst consisiting of titanium compounds or vanadium compounds. However, the molecular structure of copolymers obtained by using catalyst consisting of titanium compounds is isotactic. Although the copolymers having a syndiotactic structure have been obtained by using catalysts consisting of vanadium compounds, their syndiotacticity is very poor and they have no crystallinity. Thus, crystalline propylene-olefin copolymers with a highly syndiotactic structure were not obtained by using a conventional Zieglar-Natta catalyst.

The crystalline propylene-ethylene or propylene-olefin random copolymers with a highly syndiotactic structure have been recently obtained with a catalyst consisiting of isopropylidene (cyclopentadienyl-1-fluorenyl)zirconium dichloride and methyl aluminoxane.

For example, in JP-A-6-87930, syndiotactic copolymer of propylene and butene-1 was reported but butene-1 content of the copolymers is less than 3 mole %.

In EP-0395055-A1, copolymers of propylene and olefins or propylene and ethylene having a syndiotactic structure were also described. These, however, are copolymers containing 20 mole % or less of comonomers such as ethylene or olefins.

Thus, syndiotactic copolymers of propylene and olefins which contains more than 20 mole % of olefin have not been described. Furthermore, crystalline copolymers of propylene and olefins with a syndiotactic structure which have a crystalline part of low melting temperature and relatively high stiffness even when the content of olefin is more than 20 mole % and simultaneously have a relatively high content of an amorphous part excellent in transparency and impact property have not been obtained.

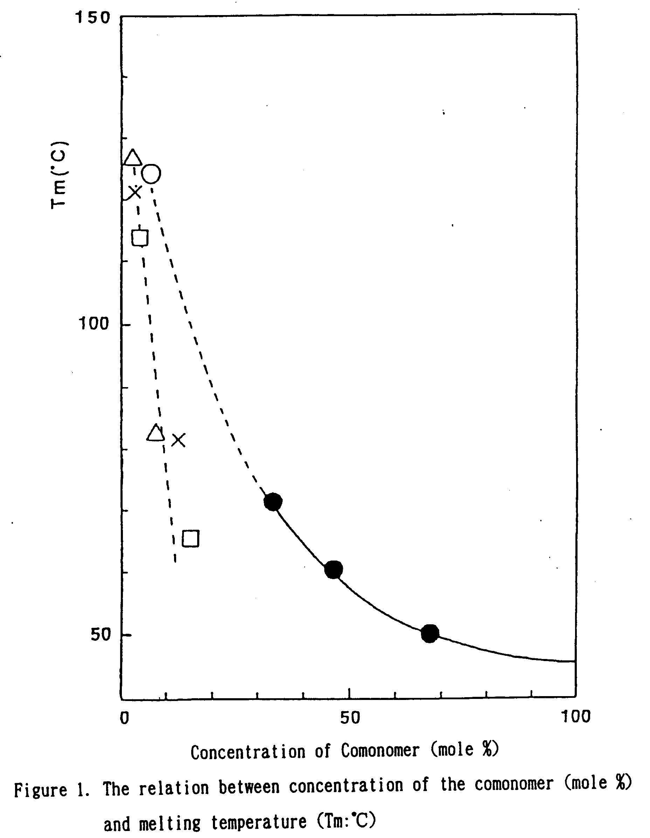

It has been well known that crystallinity of propyleneethylene or propylene-olefin random copolymers is varied with an amount of comonomers such as ethylene or olefin contained in the random copolymers. The fact that the melting temperature of copolymers of propylene and olefin other than butene-1 can not be observed when the amount of the comonomers is relatively high as shown in figure 1 and examples means that the copolymers have no crystallinity.

## SUMMARY OF THE INVENTION

As the result of an extensive study to solve the above problems, the present inventors have discovered that, among syndiotactic copolymers of propylene and olefins having a high comonomer content, such crystalline propylene-olefin copolymers with a syndiotactic structure can be obtained only when the olefin is butene-1.

Accordingly, the present invention relates to a crystalline copolymer of propylene and butene-1 with an essentially syndiotactic structure, the copolymer containing from 31 to 99 mole percent of butene-1, having a intrinsic viscosity [$\eta$] of from 0.5 to 10 dl/g as measured in tetralin at 135°C, having a crystalline structure and crystallinity of at least 10% or more.

The present invention also relates to a crystalline copolymer of propylene and butene-1 having a peak derived from propylene-butene-1 chain at from 43.8 to 44.1 ppm in the $^{13}$C-NMR spectrum.

The present invention further relates to syndiotactic crystalline copolymer of propylene and butene-1, the melting temperature (Tm) of which is 40°C or above.

## BRIEF DESCRIPTION OF DRAWINGS

Figure 1 shows the relation between concentration (in mole %) of the comonomer in the copolymers and melting temperature (Tm : °C) of the copolymers.

[Explanation of Symbols]

● : propylene-butene-1 copolymers (EXAMPLES)

○ : propylene-butene-1 copolymers (REFERENCE EXAMPLES)

□ : propylene-pentene-1 copolymers (REFERENCE EXAMPLE and COMPARATIVE EXAMPLE)

× : propylene-hexene-1 copolymers (REFERENCE EXAMPLE and COMPARATIVE EXAMPLE)

Δ : propylene-4-methyl-pentene-1 copolymers (REFERENCE EXAMPLE and COMPARATIVE EXAMPLES)

## DETAILED DESCRIPTION OF THE PRESENT INVENTION

The present invention will be explained in more detail in the following description.

The syndiotactic crystalline copolymer of propylene and butene-1 according to the present invention is that having butene-1 content of from 31 to 99 mole percent, preferably from 35 to 99 mole percent. If the butene-1 content is lower than 31 mole percent, impact strength and transparency are inferior and if the butene-1 content is 100 mole percent (which means butene-1 homopolymer), crystallization rate is so slow that its moldability is inferior. Additionally, the syndiotactic crystalline copolymer of propylene and butene-1 of the present invention which has butene-1 content of 70 mole % or less is more preferably since that its melting temperature is above 50°C and its moldability is more superior as described below.

The intrinsic viscosity [η] of the syndiotactic propylene-butene-1 copolymer of the present invention, as measured in tetralin at 135°C, is from 0.5 to 10 dl/g, preferably from 0.5 to 5 dl/g.

The syndiotactic propylene-butene-1 copolymer of the present invention forms crystalline even though butene-1 content of the copolymers is as high as from 31 to 99 mole percent. This is evident from the fact that the copolymers have a melting temperature (Tm) in such a whole range of butene-1 content.

In molding process of crystalline polymers, the melting temperature of the polymers is one of the important factors for determining the molding conditions because the polymer is cooled at the temperature below the melting temperature to crystallize and mold into articles after the polymers are melted. If the melting temperature of the polymers is lower than room temperature, it takes a long time for cooling stage or the cooling temerature must be very low in the molding proccess. These molding conditions are not of practical use.

Thus, the melting temperature of the copolymer of the present invention is preferably higher than room temperature of about 30°C. That is, the melting temperature of the copolymer of the present invention is 40°C or above, preferably 45°C or above and more preferably 50°C or above. The melting temperature of the copolymer of the present invention is depend on the butene-1 content of the copolymers as shown in figure 1.

Also, the copolymer of the present invention has a crystallinity of at least 10% or more. Further, the copolymer of the present invention is characterized in having a lattice distance of (200) plane of polypropylene crystal structure, as determined by wide angle X-ray diffraction, of 7.5 angstrom or more.

The syndiotactic structure of the copolymer of the present invention is proved by the fact that the copolymer has a peak of propylene-butene-1 chain at from 43.8 to 44.1 ppm in the $^{13}$C-NMR spectrum.

Further, the copolymer of the present invention has a ratio of weight-average molecular weight and number-average molecular weight (Mw/Mn), showing degree of the molecular weight distribution, of from 1.8 to 2.5, preferably from 2.0 to 2.3.

As described above, the propylene-butene-1 copolymers of the present invention forms crystalline structure even though butene-1 content of the copolymer is in a wide range and at a high value. This is a specific property which can be observed only in the case of syndiotactic propylene-butene-1 copolymer. For example, as is obvious from Examples described later and Figure 1, when the comonomer is hexene-1, pentene-1 or 4-methyl-pentene-1, the obtained copolymers have a region in which the melting temperature (Tm) is not observed. It is assumed that the above fact is attributed to the close resemblance in crystalline structures of syndiotactic polypropylene and syndiotactic polybutene-1 (C.D. Rossa, Macromolecules, 24, 5645 (1991)).

The process for the production of the crystalline propylene-butene-1 random copolymer of the present invention is not particularly limited and the copolymers can be prepared by copolymerization of propylene with butene-1 in the method and under the conditions in which syndiospecific polymerization of propylene can be proceeded.

As regards the catalyst, any polymerization catalyst for propylene that gives a syndiotactic polypropylene with [rrrr] pentad fraction of 0.7 or more as measured with $^{13}$C-NMR in a solution of o-dichlorobenzene at 135°C can be suitably used. Examples include compounds of transition metals of the group IVB in the periodic table having a cyclopentadienyl ring, i.e. titanium, zirconium and hafnium compounds, of Cs symmetry, having a multidentate coordination compound, as a ligand, with at least two groups, bound through lower alkylene groups, selected from the group consisting of cycloalkadienyl groups or their substituted counterparts, particularly cyclopentadienyl group, substituted cyclopentadienyl group and their partially hydrogenated derivatives, and the group consisting of fluorenyl group, substituted fluorenyl group and their partially hydrogenated derivatives.

As the cocatalyst system, aluminoxanes or systems comprising an cation forming agent containing boron and organic aluminum compound can be used. For example, a catalyst system comprising isopropylidene (cyclopentadienyl-1-fluorenyl)MCl$_2$ (wherein M is Ti, Zr or Hf) and methyl aluminoxane, described by Ewen, et al, in J. Am. Chem. Soc., 110, 6255(1988) may be mentioned.

In the copolymerization process, the manner of charging butene-1 is not particularly limited. It may be charged before or during the polymerization and the charging may be practiced in one portion, in divided portion or continuous. The amount of butene-l to be charged varies with the polymerization conditions but preferably the molar ratio of butene-1 to propylene is about 0.65 or more.

The method for polymerization is not particularly limited and solvent polymerization (suspension polymerization, solution polymerization) using inert hydrocarbon and the like or bulk polymerization and gas phase polymerization conducted under conditions substantially free of inert hydrocarbon solvents, may be utilized.

As hydrocarbon solvents applied to the copolymerization, for example, saturated hydrocarbons such as butane, pentane, hexane, heptane, octane, nonane, decane, cyclopentane, cyclohexane and the like, aromatic hydrocarbons such as benzene, toluene, xylene and the like, and chlorine-containing solvents such as chloroform, dichloromethane, ethylene dichloride, chlorobenzene and the like may be mentioned. Further, the copolymerization may be carried out in propylene as the starting material.

The polymerization is generally carried out at a polymerization temperature of from -100 to 200°C and under a polymerization pressure of from the normal pressure to 100kgf/cm$^2$ and preferably in the range of from -50 to 100°C and of from the normal pressure to 50kgf/cm$^2$. The molecular weight of the copolymers of the present invention can be controlled by adding of hydrogen and/or polymerization temperature.

The copolymer obtained in the present invention may be combined, if necessary, with conventional antioxidants, neutralization agents, lubricants, antiblocking agents, antistatic agents and the like provided that they do not adversely affect the purpose of the present invention.

The copolymer obtained in the present invention can be molded into various articles produced by conventional molding methods such as blow molding, injection molding and extrusion. The copolymer obtained in the present invention are more useful for bottles produced by blow molding or films produced by extrusion : this is due to the good transeparency and the excellent balanace between rigidity and impact property of these articles obtained therefrom.

The present invention will be explained with reference to the following Examples, which should not be construed as a limitation upon the scope of the invention.

In the Examples, various values as measured in items were obtained by the following methods.

(1)Butene content

The butene-1 content was determined by $^{13}$C-nuclear magnetic resonance spectrum method. Measurement of $^{13}$C-NMR spectra was carried out using a solution of 150 mg of a copolymer in 3 ml of o-dichlorobenzene (containing tetramethoxy silane as the standard) contained in a test tube having a diameter of 10 mm, usually under the conditions of measuring temperature of 135°C, measuring frequency of 67.8 MHz, spectral band width of 3000 Hz, filter width of 10000 Hz, pulse repeating time of 10 seconds, pulse width of 45° and accumulation number of from 5000 to 7000.

(2)Melting temperature (Tm)

After melting 10 mg of a sample at 220°C for 5 minutes under nitrogen atmosphere, it was allowed to cool to the room temperature at a rate of 3°C/minute and left to stand at 23°C for a week to crystallize, using a differential scanning calorimeter (manufactured by Perkin-Elmer, DSC-VII). Then, the temperature was elevated from 20°C up to 180°C at a rate of 10°C /minute and a temperature of observed maximum peak in the fusion-endothermic curve was taken as the melting temperature (Tm).

(3) Crystallinity

The propylene-olefin copolymer was subjected to melt pressing at 230°C to form a sheet of 1.0 mm in thickness and heating was stopped under the pressing state. After 10 hours, the sheet was taken out and sample pieces were prepared.

The wide angle X-ray diffraction of the prepared samples were measured under the following conditions:

Apparatus: Rigaku RU 200B
Tube: Cu
Voltage: 40 KV
Current: 100 mA
Divergence slit: 1.0°
Scatter slit: 1.0°
Receiving slit: 0.15°
Measuring range: 2θ = 5 - 35°

Crystallinity was determined from the ratio of amorphous and crystalline parts in the obtained diffraction spectrum, according to Macromol. Sci. - Phys., B 30(4), 319(1991).

(4) Spacing of crystal lattice plane

In the above (3), spacing was obtained from the following equation:

$d = n\lambda/2\sin\theta$ (n = 1, $\lambda$ = 1.54 angstroms)

based on the diffraction angle derived from the diffraction of (200) plane in the crystal lattice observed around the region in which 2θ is from 10 to 12.5 in the measured wide angle X-ray spectrum.

(5) Flexural Modulus (FM(23°C))

The propylene-olefin copolymer was formed into a pressed sheet of 0.25 mm in thickness according to JIS K6758-81. Then, test piece of 40 mm in length, 2 mm in width and 0.25 mm in thickness were cut from the sheet and subjected to measurement of flexural modulus at 23°C when vibrated at a frequency of 110 Hz, warming from -150 to 130°C at a rate of 2.0°C/minute, using an automatic dynamic viscoelasticity measuring apparatus (RHEOBIBRON DV-11-EA, manufactured by Orientec Co.).

(6) Glass transition temperature (Tg)

In the above automatic measurement of dynamic viscoelasticity, the temperature at which a peek of relaxation was observed was taken as the glass transition temperature (Tg).

(7) Number-average molecular weight (Mn) and degree of molecular weight distribution (Mw/Mn)

Number-average molecular weight (Mn) and degree of molecular weight distribution (Mw/Mn) were measured by gel permeation chromatography (GPC) under the following conditions:

Apparatus: Model 150 CV, manufactured by Waters
Column: Shodex M/S 80
Measuring temperature: 145°C
Solvent: o-dichlorobenzene

Sample concentration: 5 mg/8 ml

EXAMPLE 1

(preparation of a catalyst solution)

Isopropylidene(cyclopentadienyl-1-fluorenyl) zirconium dichloride was synthesized by lithiation of isopropylidene(cyclopentadienyl-1-fluorene) prepared according to the ordinary method and reacting the lithiated product with zirconium tetrachloride followed by recrystallization. Separately, a 100 ml flask equipped with a magnetic stirrer was purged with nitrogen and 6.1 micromole ($\mu$ mole) of the obtained catalyst was added to a solution containing 1000 times methyl aluminoxane, produced by TOSOH-AKZO Co., by [Al]/[Zr] molar ratio. After stirring at the room temperature for 5 minutes, a purple solution of catalyst was produced.

(Method of polymerization)

A 1 liter stainless steel autoclave with a stirrer was purged with nitrogen and 2.5 mole of liquid butene-1, then 3.3 mole of liquid propylene were charged. The autoclave was prepared for polymerization by adjusting the temperature of autoclave to 25°C which is polymerization temperature. The catalyst solution prepared above was charged in the autoclave with pressure and polymerization was conducted at 25°C for 1 hour. After the prescribed time was passed, 10 ml of isobutanol was added with pressure and the stirring was continued for further 30 minutes to complete the polymerization. When the polymerization was completed, unreacted monomers were purged and contents of the autoclave was poured into 2 liters of ethanol. The precipitated polymer was dried at 60°C for 4 hours to give 35.0 g of propylenebutene-1 copolymer. The obtained copolymer had a butene-1 content of 33.7 mole %, a melting temperature (Tm) of 72.1°C as measured by the differential scanning calorimeter, Tg of 3.7°C, Mn of 110000, Mw/Mn of 2.1, crystallinity of 20.3 % and FM (23°C) of 3900 kgf/cm². The spacing of lattice plane (200) as determined by wide angle X-ray diffraction was 7.59 angstrom.

EXAMPLE 2

The procedure of polymerization in EXAMPLE 1 was repeated except that the amount of catalyst was changed to 4.2 micromole and 3.2 mole of liquid butene-1 and 2.4 moles of liquid propylene were used to give 24.4 g of propylene-butene-1 copolymer. The obtained copolymer had a butene-1 content of 46.3 mole %, Tm of 60.4°C as measured by the differential scanning calorimeter, Tg of 1.2°C, Mn of 97000, Mw/Mn of 2.2, crystallinity of 17.7 % and FM (23°C) of 2800 kgf/cm². The spacing of lattice plane (200) as determined by wide angle X-ray diffraction was 7.84 angstrom.

## EXAMPLE 3

The procedure of polymerization in EXAMPLE 1 was repeated except that the amount of catalyst was changed to 3.5 micromole and 4.0 mole of liquid butene-1 and 1.3 mole of liquid propylene were used to give 19.8 g of propylene-butene-1 copolymer. The obtained copolymer had a butene-1 content of 67.8 mole %, Tm of 50.0°C, Mn of 73000, Mw/Mn of 2.2, crystallinity of 17.1 % and FM (23°C) of 2000 kgf/cm$^2$. The spacing of lattice plane (200) as determined by wide angle X-ray diffraction was 8.17 angstrom.

## COMPARATIVE EXAMPLE 1

The procedure of EXAMPLE 1 was repeated except that the amount of catalyst was changed to 5.1 micromole and 0.6 mole of pentene-1 and 2.3 mole of liquid propylene were used to give 9.0 g of propylene-pentene-1 copolymer. The obtained copolymer had a pentene-1 content of 21.1 mole % and Tm was not observed. The copolymer had Mn of 130000 and Mw/Mn of 1.8.

## COMPARATIVE EXAMPLE 2

The procedure of EXAMPLE 1 was repeated except that the amount of catalyst was changed to 5.8 micromole and 0.5 mole of hexene-1 and 2.3 mole of liquid propylene were used to give 49.7 g of propylene-hexene-1 copolymer. The obtained copolymer had a hexene-1 content of 21.7 mole % and Tm was not observed. The copolymer had Mn of 110000 and Mw/Mn of 1.8.

## COMPARATIVE EXAMPLE 3

The procedure of EXAMPLE 1 was repeated except that the amount of catalyst was changed to 6.0 micromole and 0.5 mole of 4-methyl-pentene-1 and 2.3 mole of liquid propylene were used to give 35.1 g of propylene-4-methyl-pentene-1 copolymer. The obtained copolymer had a 4-methyl-pentene-1 content of 17.5 mole % and Tm was not observed. The copolymer had Mn of 100000 and Mw/Mn of 1.8.

## REFERENCE EXAMPLE 1

The procedure of EXAMPLE 1 was repeated except that the amount of catalyst was changed to 5.8 micromole and 0.5 mole of liquid butene-1 and 6.0 mole of liquid propylene were used to give 21.9 g of propylene-butene-1 copolymer. The obtained copolymer had a butene-1 content of 6.6 mole %, Tm of 124.7°C, Tg of 11.5°C, Mn of 160000, Mw/Mn of 1.9, crystallinity of 29.8 % and FM (23°C) of 7550 kgf/cm$^2$. The spacing of lattice plane (200) as determined by wide X-ray diffraction was 7.30 angstrom.

## REFERENCE EXAMPLE 2

The procedure of EXAMPLE 1 was repeated except that the amount of catalyst was changed to 4.2 micromole and 0.1 mole of pentene-1 and 2.7 mole of liquid propylene were used to give 5.6 g of propylene-pentene-1 copolymer. The obtained copolymer had a pentene-1 content of 3.9 mole %, Tm of 114.1°C Tg of 11.7°C and FM (23°C) of 6480 kgf/cm$^2$.

## REFERENCE EXAMPLE 3

The procedure of EXAMPLE 1 was repeated except that the amount of catalyst was changed to 4.6 micromole and 0.4 mole of pentene-1 and 2.7 mole of liquid propylene were used to give 15.6 g of propylene-pentene-1 copolymer. The obtained copolymer had a pentene-1 content of 15.1 mole %, Tm of 65.0°C, Tg of 5.7°C, Mn of 140000, Mw/Mn of 2.0, crystallinity of 10.9 % and FM (23°C) of 1640 kgf/cm$^2$.

## REFERENCE EXAMPLE 4

The procedure of EXAMPLE 1 was repeated except that the amount of catalyst was changed to 5.8 micromole and 0.17 mole of hexene-1 and 6.3 mole of liquid propylene were used to give 37.2 g of propylene-hexene-1 copolymer. The obtained copolymer had a hexene-1 content of 2.8 mole %, Tm of 120.6°C, Tg of 12.4°C and FM (23°C) of 6760 kgf/cm$^2$.

## REFERENCE EXAMPLE 5

The procedure of EXAMPLE 1 was repeated except that the amount of catalyst was changed to 3.4 micromole and 0.67 mole of hexene-1 and 5.3 mole of liquid propylene were used to give 7.1 g of hexene-1-propylene copolymer. The obtained copolymer had a hexene-1 content of 12.7 mole %, Tm of 81.5°C, Tg of 5.4°C, Mn of 150000, Mw/Mn of 2.3, crystallinity of 10.1 % and FM (23°C) of 1570 kgf/cm$^2$.

## REFERENCE EXAMPLE 6

The procedure of EXAMPLE 1 was repeated except that the amount of catalyst was changed to 4.2 micromole and 0.17 mole of 4-methyl-pentene-1 and 6.3 mole of liquid propylene were used to give 47.4 g of propylene-4-methyl-pentene-1 copolymer. The obtained copolymer had a 4-methyl-pentene-1 content of 2.4 mole %, Tm of 126.5°C, Tg of 14.3°C and FM (23°C) of 8260 kgf/cm$^2$.

**REFERENCE EXAMPLE 7**

The procedure of EXAMPLE 1 was repeated except that the amount of catalyst was changed to 3.2 micromole and 0.33 mole of 4-methyl-pentene-1 and 2.7 mole of liquid propylene were used to give 8.3 g of propylene-4-methyl-pentene-1 copolymer. The obtained copolymer had a 4-methyl-pentene-1 content of 7.4 mole %, Tm of 82.7°C, Tg of 13.7°C, Mn of 130000, Mw/Mn of 2.0, crystallinity of 13.1 % and FM (23°C) of 3980 kgf/cm$^2$.

As is evident from EXAMPLES, COMPARATIVE EXAMPLES and the like, while propylene-olefin copolymers in which the comonomer is other than butene-1 had some crystallinity in the region where the comonomer content was relatively low as shown in REFERENCE EXAMPLES, the copolymers already showed no crystallinity if the comonomer content was about 20 mole %. Therefore, it can be clearly found that, only when the comonomer is butene-1, the copolymer shows crystallinity at a wide range of butene-1 content namely from 31 to 99 mole %.

According to the present invention, syndiotactic crystalline copolymer of propylene and butene-1 of which butene-1 content is from 31 to 99 mole % are provided. On the other hand, when the comonomer is other than butene-1, propylene-olefin copolymers already show no crystallinity if the comonomer content is high concentration as about 20 mole %. This fact indicates the specific characteristic of propylene-butene-1 copolymer. This characteristic allows improvement of impact properties and transparency.

**Claims**

1.  A crystalline copolymer of propylene and butene-1 with an essentially syndiotactic structure, the copolymer containing from 31 to 99 mole percent of butene-1, having a intrinsic viscosity [η] of from 0.5 to 10 dl/g when measured in tetralin at 135°C and crystalline structure.

2.  The crystalline copolymer of propylene and butene-1 as claimed in claim 1, where the copolymer has a peak of propylene-butene-1 chain at from 43.8 to 44.1 ppm in the $^{13}$C-NMR spectrum.

3.  The crystalline copolymer of propylene and butene-1 as claimed in claim 1, of which melting temperature is 40°C or above.

4.  The crystalline copolymer of propylene and butene-1 as claimed in claim 1, of which crystallinity is 10 % or more.

5.  The crystalline copolymer of propylene and butene-1 as claimed in claim 1, of which butene-1 content is from 31 to 70 mole %.

6.  The crystalline copolymer of propylene and butene-1 as claimed in claim 1, of which melting temperature is 50°C or above.

7.  A process for producing a crystalline copolymer of propylene and butene-1 with an essentially syndiotactic structure, the copolymer containing from 31 to 99 mole percent of butene-1, having a intrinsic viscosity [η] of from 0.5 to 10 dl/g when measured in tetralin at 135°C and crystalline structure, which comprises the polymerization of propylene and butene-1 with polymerization catalysts for propylene that give a syndiotactic polypropylene with [rrrr] pentad fraction of 0.7 or more as measured with $^{13}$C-NMR in a solution of o-dichlorobezene at 135°C.

8.  A molded article obtained from a crystalline copolymer of propylene and butene-1 with an essentially syndiotactic structure, the copolymer containing from 31 to 99 mole percent of butene-1, having a intrinsic viscosity [η] of from 0.5 to 10 dl/g when measured in tetralin at 135°C and crystalline structure.

Figure 1. The relation between concentration of the comonomer (mole %) and melting temperature (Tm:°C)

European Patent
Office

**EUROPEAN SEARCH REPORT**

Application Number

EP 95 30 4019

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 422 498 (MITSUI TOATSU CHEMICALS) 17 April 1991 * examples 1-3 * | 1-8 | C08F210/08 C08F210/06 |
| X | EP-A-0 412 416 (MITSUI TOATSU CHEMICALS) 13 February 1991 * examples 1,2 * | 1-8 | |
| D,X | EP-A-0 395 055 (MITSUI TOATSU CHEMICALS) 31 October 1990 * examples 3,4 * | 1-8 | |
| A | JOURNAL OF THE POLYMER SCIENCE PART A: POLYMER CHEMISTRY EDITION, vol. 32, no. 4, March 1994 NEW YORK, pages 661-673, XP 000424277 RICARDO ET AL. 'Syndioselective Propylene Polymerization Catalyzed by rac-2,2-Dimethylpropylidene(1-cyclopentadi enyl)(1-fluorenyl)dichlorozirconium' | 1 | |

TECHNICAL FIELDS
SEARCHED (Int.Cl.6)

C08F

The present search report has been drawn up for all claims

| Place of search | Date of completion of the search | Examiner |
|---|---|---|
| THE HAGUE | 5 September 1995 | Kaumann, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)